# EUROPEAN PATENT APPLICATION

(11) **EP 1 201 706 A1**
(43) Date of publication of application: **02.05.2002**
(21) Application number: 01308774.7
(22) Date of filing: 16.10.2001
(51) Int. Cl.: C08K 5/37

(54) **A halogen-containing polymer composition stabilized by a latent mercaptan and a mixture of a zinc carboxylate and zinc chloride**

(30) Priority: 24.10.2000 US 242371 P
(71) Applicant: ROHM AND HAAS COMPANY, Philadelphia, Pennsylvania 19106-2399 (US)
(72) Inventor: Norris, Gene Kelly, West Chester, Ohio 45069 (US)
(74) Representative: Kent, Venetia Katherine

(57) **Abstract**

Flexible, semi-rigid, and rigid vinyl chloride polymer compositions containing a heat stabilizer comprising a latent mercaptan and a mixture of zinc chloride and a zinc carboxylate are substantially free from the offensive odor typically associated with mercaptans and are protected during processing by the degradation products of the latent (i.e., blocked) mercaptan which include a free mercaptan. The free mercaptan thus released enhances the activity of the mixture of zinc chloride and zinc carboxylate.

## Description

### FIELD OF THE INVENTION

This invention relates to a heat stabilized polymer composition normally susceptible to heat-induced deterioration which comprises a halogen-containing polymer and the degradation products of a latent mercaptan present during extrusion, injection molding and other processing of the composition at an elevated temperature, said products being formed during said processing and including a liberated mercaptan. The liberated mercaptan enhances the activity of metal-based heat stabilizers such as zinc carboxylates, zinc chloride, organotin carboxylates and mercaptides in the polymer composition. It particularly relates to the stabilization against heat of vinyl chloride polymer compositions by a latent mercaptan in combination with very low levels of a synergistic mixture of zinc chloride and a zinc carboxylate.

This invention also relates to articles of manufacture such as rigid pipe and window profile, clear flexible film, and semi-rigid tubing that are prepared from such heat-stabilized vinyl chloride polymer compositions.

### BACKGROUND OF THE INVENTION

It is well known that the physical properties of various organic polymers deteriorate and color changes take place during processing of the polymer and during exposure of formed polymer products to certain environments. Halogen-containing polymers are normally susceptible to heat-induced deterioration through autoxidation. The prime examples of such polymers are the vinyl and vinylidene polymers in which the halogen is attached directly to carbon atoms. Poly(vinyl chloride), copolymers of vinyl chloride and vinyl acetate, and poly(vinylidene chloride), the principal resin in self-clinging transparent food wraps, are the most familiar polymers which require stabilization for their survival during fabrication into pipe, window casings, siding, bottles, wall covering, packaging film, and the like. When such polymers are processed at elevated temperatures, undesirable color changes often occur within the first 5 to 10 minutes as well as during later stages of the processing. Haziness, which sometimes accompanies the color changes, is particularly undesirable where clear products are needed. The addition of heat stabilizers to such polymers has been absolutely essential to the wide-spread utility of the polymers. From a great deal of work in the development of more and more effective heat stabilizers there has emerged two principal classes: organotin compounds and mixed metal combinations. Organotin-based heat stabilizers are the most efficient and widely used stabilizers for rigid PVC. Synergistic combinations of alkyltin mercaptides and free mercaptans are particularly efficient heat stabilizers for rigid PVC during extrusion. They have not been entirely satisfactory, however, because of several failings on the part of the mercaptan synergist and are not used in flexible PVC. Many mercaptans give off an offensive odor even at room temperature and the odor grows worse at PVC processing temperatures. The oxidative stability of the mercaptans is very often very poor. Oxidation of the free mercaptans diminishes the synergism. A combination having an enhanced synergism would be welcomed especially by the flexible PVC industry. Also, because of the end use of articles made from some polymers, many polymeric compositions require the presence of both biocides and heat stabilizers but the use of the organotin mercaptide/mercaptan combination in such a composition is often frustrated by the tendency of the free mercaptan to deactivate a biocide such as the much used OBPA (10, 10-oxybisphenoxarsine).

Zinc salts in general have long been believed to be less satisfactory as heat stabilizers for halogen-containing polymers than the organotin-based stabilizers and, indeed, have lent their name to the catastrophic degradation known as zinc burn. In U.S. Patent No. 3,067,166, Zaremsky teaches the combination of from 0.002 to 0.05 part per hundred parts of resin (phr) of a tin or zinc salt along with a mercaptoacid ester for heat stabilization of halogen-containing vinyl resins. Zinc carboxylates and zinc chloride are said to be typical of the salts that may be used. It is to be noted that the compositions in each working example contain either an epoxidized soy bean oil or a phosphite.

The importance of the epoxidized soy bean oil and phosphite is shown by the work reported at the Japan Chemical Congress in Honolulu in 1979 by Deanin et al and described in "Organic Coatings and Plastics Chemistry"; 40, ACS,(1979). It was shown that although zinc chloride does catalyze the thermal degradation of PVC resins, small quantities (i.e., 0.001-0.01 phr) enhances the effect of epoxidized soy bean oil and alkylaryl phosphites in PVC compositions containing 1 phr each of zinc stearate, a barium soap, and a cadmium soap. The authors also teach that the degradative effect of zinc chloride may be overcome by large quantities of epoxy or phosphite but that each of them has its own color problems.

With reference to the Deanin article, Bae et al teach in U.S. Patent No. 4,782,170 that an organic triphosphite may form a complex with zinc chloride to provide an effective heat stabilizer for a clear PVC.

Kornbaum teaches a stabilizer for rigid PVC comprising a combination of a thiol compound with from about 0.003 to about 1 phr of an organometallic or metallic halide in U.S. Patent No. 5,166,241. The metallic halide is defined to include zinc chloride. Again, the compositions of each of the working examples make use of an epoxidized soy bean oil.

### SUMMARY OF THE INVENTION

It is an object of this invention, therefore, to provide a heat stabilizer composition having the advantages of a latent mercaptan and the synergy of a mixture of a zinc carboxylate and zinc chloride.

It is a related object of this invention to stabilize rigid, semi-rigid, and flexible PVC resin compositions with a latent mercaptan-containing heat stabilizer composition which is substantially free from the offensive odor typically associated with mercaptans.

It is still another object of this invention to provide a PVC composition and article stabilized against heat by a latent mercaptan in combination with a synergistic mixture of zinc chloride and a zinc carboxylate, with or without an epoxy compound or organic phosphite.

The synergistic mixture of zinc carboxylate and zinc chloride of this invention provides the advantage that the good early color associated with zinc chloride as a heat stabilizer is not compromised by the poor early color associated with zinc carboxylates as heat stabilizers and the long term performance associated with the carboxylates is not harmed by the presence of zinc chloride, which is notorious for causing the catastrophic zinc burn after an initial good color.

These and other objects and advantages of the invention which will become apparent from the following description are achieved by a composition comprising a halogen-containing polymer and a latent mercaptan having Formula 1: 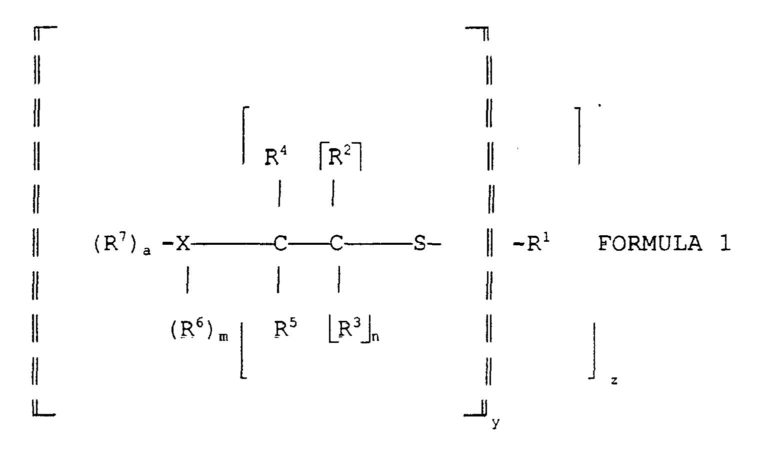 wherein a is 0 or 1, m and n are 0 or 1; y = 1 to 4; when y = 1, z is 1 to 4; and when y is more than 1, z is 1; R¹ is an alkyl, alkylenyl, cycloalkyl, cycloalkylenyl, aryl, alkaryl, aralkyl, aralkylenyl, hydroxyalkyl, dihydroxyalkyl, hydroxy(polyalkoxy)alkyl, alkoxyalkyl, hydroxyalkoxyalkyl, alkoxy(hydroxyalkyl), alkoxy(acyloxyalkyl), alkoxy(polyalkoxy)alkyl, alkoxy(polyalkoxy)carbonylalkyl, carboxyalkyl, acyloxyalkyl, acyloxy(hydroxyalkyl), acyloxyalkoxyalkyl, acyloxy(polyalkoxy)alkyl, benzoyloxy(polyalkoxy)alkyl, alkylenebis-(acyloxyalkyl), alkoxycarbonylalkyl, alkoxycarbonylalkylenyl, hydroxyalkoxycarbonylalkyl, hydroxy(polyalkoxy)carbonylalkyl, mercaptoalkyl, mercaptoalkylenyl, mercaptoalkoxycarbonylalkyl, mercaptoalkoxycarbonylalkylenyl, alkoxycarbonyl(amido)alkyl, alkylcarbonyloxy(polyalkoxy)carbonylalkyl, tetrahydopyranyloxy(polyalkoxy)carbonylalkyl, tetrahydropyranyloxyalkyl, hydroxyaryl, mercaptoaryl or carboxyaryl radical having from 1 to 22 carbon atoms; R², R³, R⁴, R⁵, R⁶, and R⁷ are independently hydrogen, a hydroxyl, mercapto, acyl, alkyl, alkylenyl, aryl, haloaryl, alkaryl, aralkyl, hydroxyalkyl, mercaptoalkyl, hydroxyaryl, alkoxyaryl, alkoxyhydroxyaryl, mercaptoaryl groups having from 1 to 22 carbon atoms; X is aryl, haloaryl, alkaryl, hydroxyaryl, dihydroxyaryl, alkoxyaryl, arylcycloalkyl, or a heteroatom, with the option that when a is 1 and m is 1, R⁶ and R⁷ form a heterocyclic moiety in conjunction with X as nitrogen, and with the further option that when a = 1 and m = 0, one of R¹, R³, and R⁵ joins with R⁷ and X to form a heterocyclic moiety with X as a heteroatom selected from the group consisting of oxygen and sulfur; with the proviso that z is 1 or 2 when X is aralkaryl, R⁶ and R⁷ are hydroxyl, a is 1 and m is 1, and with the further proviso that when R⁶ ≠ hydroxyl or mercapto, z is 1;
from about 0.005 to about 2.0 phr of a synergistic mixture of zinc chloride and a zinc carboxylate; and
from 0 to about 10 phr of at least one co-stabilizer selected from the group consisting of an epoxy compound and an organic phosphite, based on the weight of the polymer.

For the purposes of this invention, the terms "blocked mercaptan" and "latent mercaptan" are used interchangeably to mean a thioether which degrades during processing of the composition at an elevated temperature to liberate a free mercaptan.

Other products of the degradation of the latent mercaptan are believed to include carbocations of the blocking moiety which are stabilized by a molecular structure in which the electron deficiency is shared by several groups. Resonance stabilization and neighboring group stabilization are two of the possible mechanisms by which the carbocations may be stabilized. The carbocations act as intermediates in the formation of stable compounds early in the hot processing of halogen-containing polymers. Although such mechanisms and the resultant carbocations are believed to be an impetus for the liberation of the active free mercaptan, this invention is in no way limited by the foregoing attempt to explain the working of the invention. Those skilled in the art will see the resonance stabilization and neighboring group stabilization that are possible in the following structures of the blocked mercaptan; other mechanisms may be at work in other blocked mercaptans represented by these structures that also liberate an active free mercaptan upon thermal and/or chemical degradation during processing of polymeric compositions containing such blocked mercaptans.

### DETAILED DESCRIPTION OF THE INVENTION

The term halogen-containing organic polymers as used herein means halogen-containing polymers or resins in which the halogen is attached directly to the carbon atoms. The halogen-containing polymers which can be stabilized according to this invention include chlorinated polyethylene having 14 to 75%, e.g. 27%, chlorine by weight, chlorinated natural and synthetic rubber, rubber hydrochloride, chlorinated polystyrene, chlorinated polyvinyl chloride, polyvinyl bromide, polyvinyl fluoride, and vinyl chloride polymers. The vinyl chloride polymers are made from monomers consisting of vinyl chloride alone or a mixture of monomers comprising, preferably, at least about 70% by weight of vinyl chloride, based on the total monomer weight. Examples of the copolymers include those made from vinyl chloride and from about 1 to about 30% of a copolymerizable ethylenically unsaturated material such as vinyl acetate, vinyl butyrate, vinyl benzoate, vinylidene chloride, diethyl fumarate, diethyl maleate, other alkyl fumarates and maleates, vinyl propionate, methyl acrylate, 2-ethylhexyl acrylate, butyl acrylate and other alkyl acrylates, methyl methacrylate, ethyl methacrylate, butyl methacrylate and other alkyl methacrylates, methyl alpha-chloroacrylate, styrene, trichloroethylene, vinyl ketones such as vinyl methyl ketone and vinyl phenyl ketone, 1-fluoro-2-chloroethylene, acrylonitrile, chloroacrylonitrile, allylidene diacetate, chloroallylidene diacetate, and vinyl ethers such as vinyl ethyl ether, vinyl chloroethyl ether, vinyl phenyl ether, and the vinyl ether prepared by the reaction of one mole of acrolein with one mole of ethylene glycol divinyl ether. Typical copolymers include vinyl chloride-vinyl acetate (96:4 sold commercially as VYNW), vinyl chloride-vinyl acetate (87:13), vinyl chloride-vinyl acetate-maleic anhydride (86:13:1), vinyl chloride-vinylidene chloride (95:5); vinyl chloride-diethyl fumarate (95:5), and vinyl chloride 2-ethylhexyl acrylate (80:20).

As used herein, the term PVC composition means a composition comprising a halogen-containing vinyl polymer in which the halogen is attached directly to a carbon atom. A rigid PVC composition is one which does not contain a plasticizer. A semi-rigid PVC composition is one which contains from 1 to about 25 parts of a plasticizer per 100 parts by weight of the halogen-containing vinyl polymer. A flexible PVC composition contains from about 25 to about 100 parts of the plasticizer per 100 parts by weight of the halogen-containing vinyl polymer. Alkyl esters of carboxylic acids in which there are from 1 to 3 alkyl groups having from 8 to 12 carbon atoms are representative of the plasticizers. The alkyl group may be n-octyl, 2-ethylhexyl, nonyl, decyl, or dodecyl. Suitable esters include phthalates, trimellitates, benzoates, adipates, glutarates, and sebacates. The plasticizer may also be a pentaerythritol or such an ester thereof. A polymeric plasticizer is also suitable. For the purposes of this invention, all of the halogen-containing polymer compositions are classified in the same way as rigid, semi-rigid, and flexible.

As used herein, a hydrocarbyl radical contains from 1 to 20 carbon atoms and may be an alkyl, cycloalkyl, aryl, arylene, alkaryl, aralkyl, or an aralkenyl or alkenyl radical having up to 3 ethylene double bonds; likewise, said radicals constitute the hydrocarbyl portion of a hydroxyhydrocarbyl radical. As used herein: a monovalent radical has but one valence available for combining with another radical whereas a divalent radical may combine with two other radicals; the term alkyl represents monovalent straight or branched chain hydrocarbon radicals ; the term alkylenyl represents divalent, trivalent, and tetravalent straight or branched chain hydrocarbon radicals; the term oxyalkylenyl represents a divalent radical of a polyalkylene ether molecule having a polyalkoxy chain of from 2 to 4 of such radicals, wherein the alkylene moiety has 2 or 3 carbon atoms.

Also, as used herein: an acyloxyalkyl radical originates from a carboxylic acid ester of an alkyl alcohol; the R¹ radical in Formula 1 below, therefore, in the stearic acid ester of mercaptopropanol is the stearoyloxypropyl radical; likewise, the R1 radical of the oleic acid ester of mercaptopropanol, which is one of the tallate esters of that alcohol, is the oleoyloxypropyl radical. The R¹ radical of lauryl-3-mercaptopropionate, on the other hand, is dodecyloxycarbonylethyl.

The phrase "parts per hundred parts of resin is abbreviated herein as "phr". Also, as used in this invention, substantially means largely if not wholly that which is specified but so close that the difference is insignificant.

The stabilizer compositions of this invention comprise from about 25 % to about 99.5%, preferably from about 93.5 % to about 97.5 % of a latent mercaptan, from 0.5 to about 75% of a synergistic mixture of zinc chloride and zinc carboxylate, based on the total weight of the stabilizer composition, with or without a co-stabilizer selected from the group consisting of an epoxy compound and an organic phosphite, and with or without other metallic-based stabilizers, as defined hereinbelow, or other conventional non-metallic stabilizers. The stabilizer compositions of this invention are particularly suited to impart both good early color and superior long term stabilization against the deteriorative effects of heat and ultra-violet light on both rigid and flexible PVC resins and other halogen-containing polymers in comparison with the separate use of zinc chloride and zinc carboxylate as previously done in the art. They may be prepared by blending the components thereof in any convenient manner which produces a homogeneous mixture, such as by shaking or stirring in a container. It is advantageous to add the zinc chloride in the form of a concentrated aqueous solution, e.g., about 50% by weight. Likewise, the stabilizer compositions of this invention can be incorporated in a halogen-containing polymer by admixing the components of the stabilizer composition and of the polymer composition, such as, for example, in an appropriate mill or mixer or by any other of the well-known methods which provide uniform distribution of the stabilizer throughout the polymer composition.

One of the advantages of this invention is that the offensive odor of mercaptans is masked by a blocking group so that the latent mercaptan thus created may be put into a PVC composition or the like with little or no offense to the operator with the knowledge that the free mercaptan will be released as a degradation product when the treated composition is heated during processing, e.g. extrusion and injection molding.

The compounds used for blocking the mercaptan group in the latent mercaptans of this invention are preferably those which are capable of furnishing a stabilized carbocation having a molecular structure in which the electron deficiency is shared by several groups. Resonance stabilization and neighboring group stabilization are two of the possible mechanisms by which the carbocations may be stabilized.

The mercaptan-containing organic compounds which may be converted into latent mercaptans for the purposes of this invention are well-known compounds and include alkyl mercaptans, mercapto esters, mercapto alcohols, and mercapto acids. See, for example, U.S. Pat. Nos. 3,503,924 and 3,507,827. Alkyl mercaptans having from 1 to about 200 carbon atoms and from 1 to 4 mercapto groups are suitable. Mercaptan-containing organic compounds which include R¹ have structures illustrated by the following formulas: 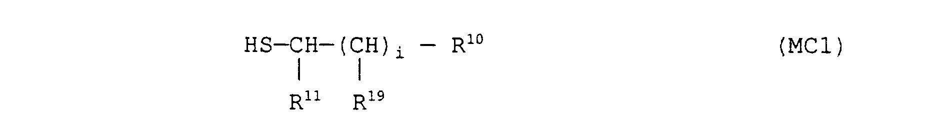 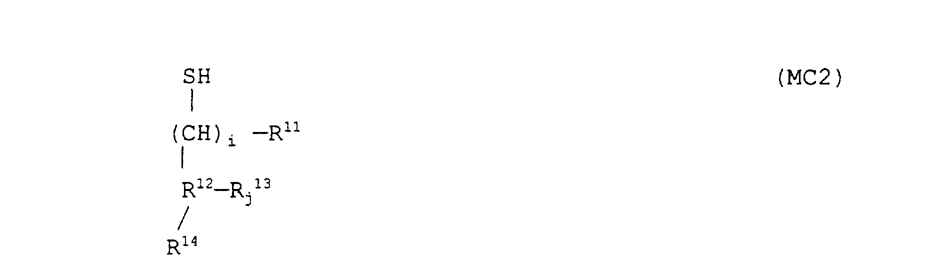 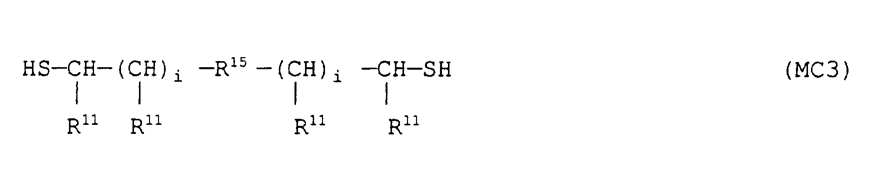 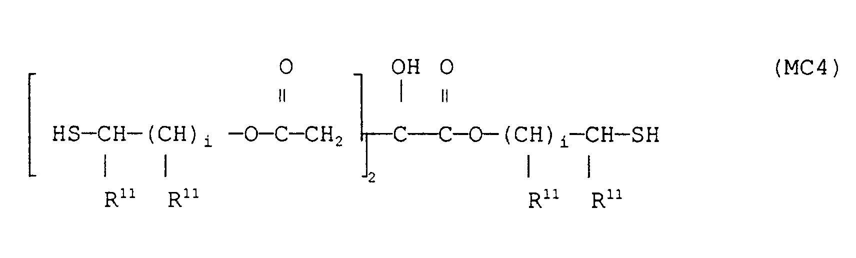 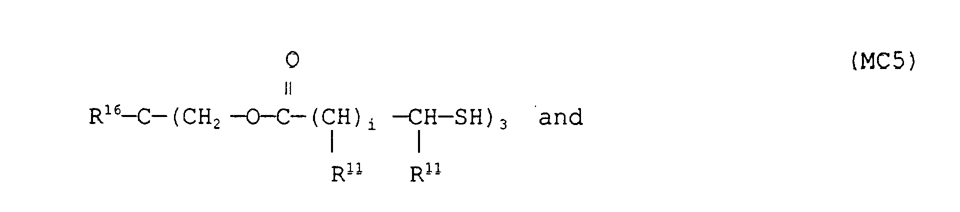 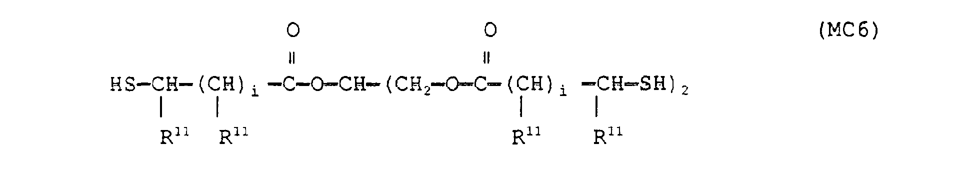 wherein R¹⁰ and R¹⁹ are the same or different and are 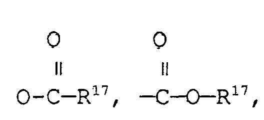 -OH, -SH, aryl, C₁ to C₁₈ alkyl, or -H;
R¹¹ is -H, aryl, or C₁ to C₁₈ alkyl;
R¹² is cycloalkyl, cycloalkenyl or phenyl;
R¹³ is 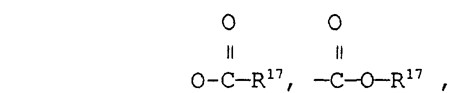 -SH, aryl, C₁ to C₁₈ alkyl, -OH or - H with the proviso that in formula (MC2) when R¹² is phenyl, R¹³ is -OH and i=0, then the -SH groups are on non-adjacent carbon atoms;
R¹⁴ is -H or a divalent group which may contain halogen, hydroxy, mercapto or alkyl substituents and which when R¹² is phenyl combines with the phenyl to form a naphthalene ring;
R¹⁵ is 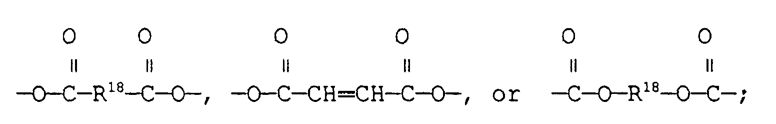
R¹⁶ is -CH₃, -CH₂CH₃, or 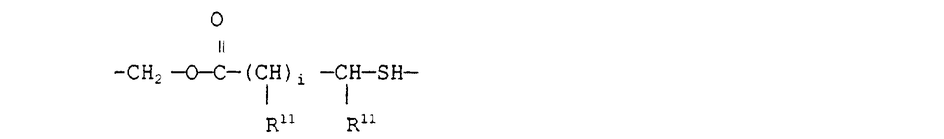
R¹⁷ is -H, or alkyl, alkenyl, aryl, aralkyl, alkaryl, cycloalkyl, cycloalkylenyl;
R¹⁸ is arylene, C₁ to C₈ alkylenyl, 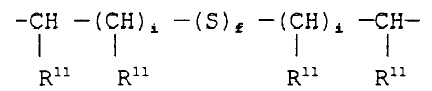 or -(CH₂ -CH₂ -O)_{b} -CH₂ -CH₂ -
   wherein b is an integer from 1 to 6;
   i=0 or an integer from 1 to 6 inclusive;
   j=0, 1, 2 or 3; and
   f=1 or 2.

Mercaptan-containing organic compounds preferred as intermediates in the preparation of the latent mercaptans of this invention are those compounds according to formula (MC1) where R¹¹ is -H, R¹⁹ is -H, R¹⁰ is OH or 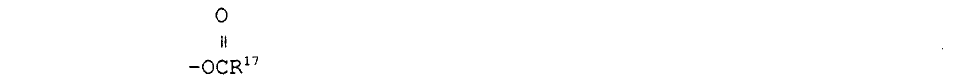 and i=1; those compounds according to formula (MC2) where R¹² is phenyl, R¹¹ is -H, R¹³ is -H, R¹⁴ is -H, i=1, and j=1; those compounds according to formula (MC3) where R¹¹ is -H, R¹⁵ is 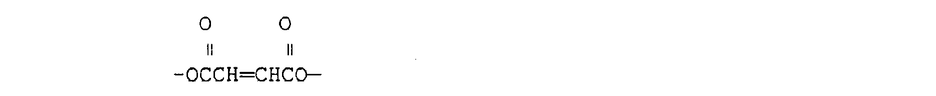 and i=1; those compounds according to formula (MC4) where R¹¹ is -H and i=1; those compounds according to formula (MC5) where R¹⁶ is -C₂H₅ or 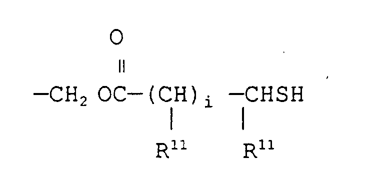 R¹¹ is -H and i=1; and those compounds according to formula (MC6) where R¹¹ is -H and i=1.

Examples of the mercaptan-containing organic compounds described by formula (MC1) include, but are not limited to, the following compounds:

HSC₁₂H₂₅

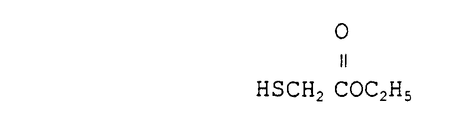

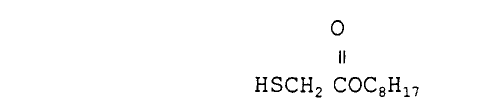

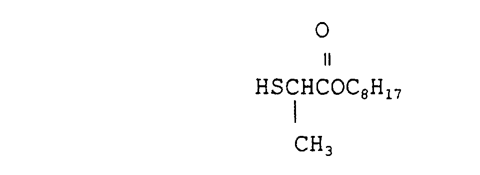

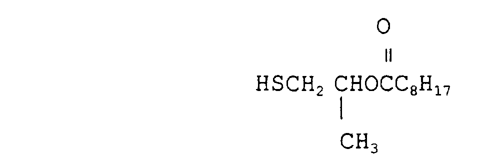

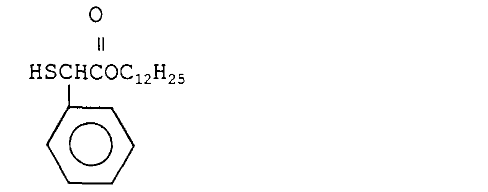

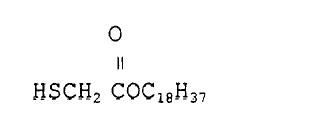

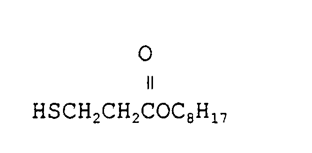

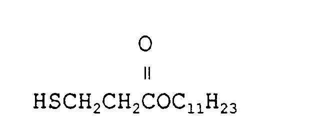

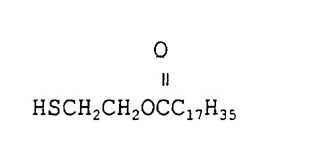

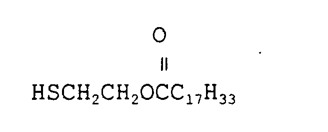

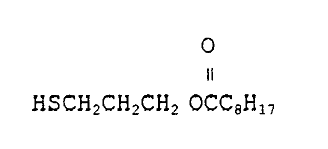

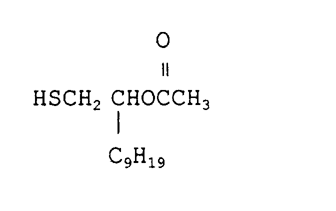

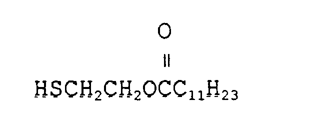

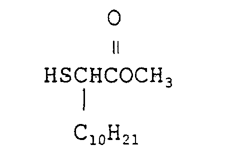

HSCH₂CH₂OH

HSCH₂CH₂CH₂OH

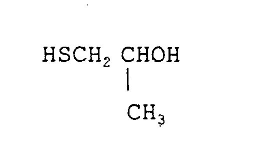

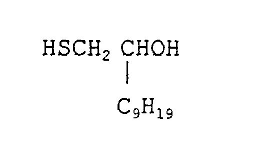

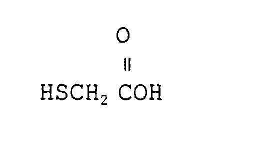

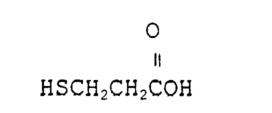

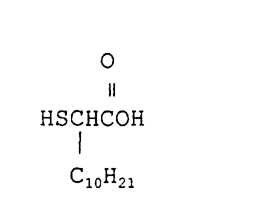

Examples of the mercaptan-containing organic compounds described by formula (MC2) include, but are not limited to, the following compounds:

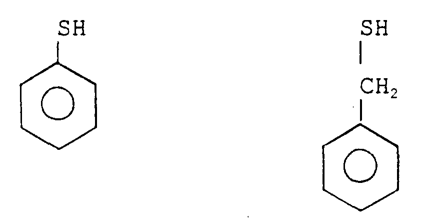

Examples of mercaptan-containing organic compounds represented by formula (MC3) include, but are not limited to the following compounds:

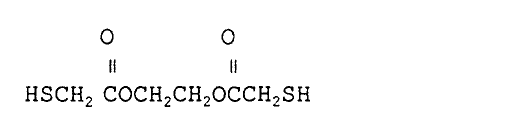

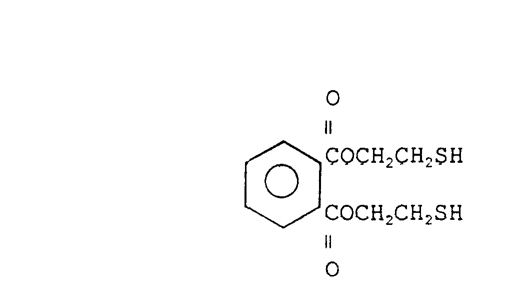

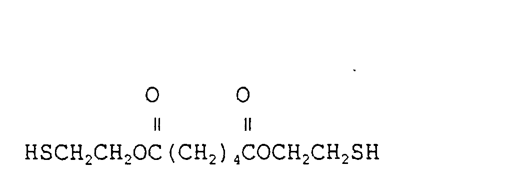

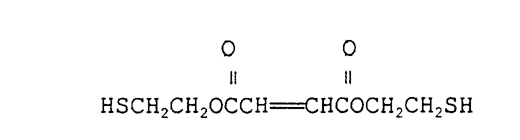

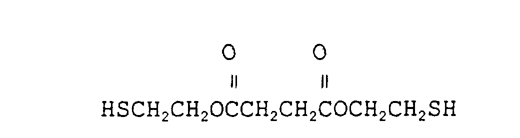

The mercaptan-containing organic compounds described by formula (MC4) are exemplified by, but are not limited to, the following:

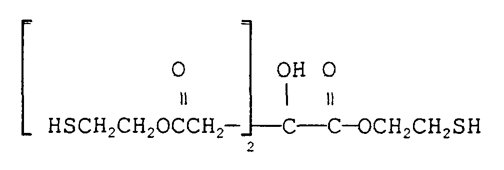

The mercaptan-containing organic compounds represented by formula (MC5) are exemplified by, but are not limited to, the following:

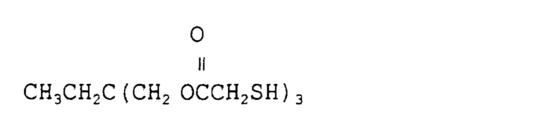

The mercaptan-containing organic compounds represented by formula (MC6) are exemplified by, but are not limited to, the following:

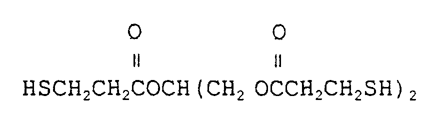

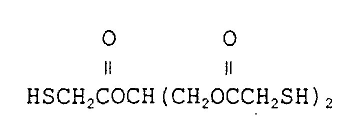

Any one or more of such mercaptan=containing compounds may be used in this invention as an alien free mercaptan, as that term is defined hereinabove.

The blocking compounds are preferably those which are capable of furnishing a stabilized carbocation having a molecular structure in which the electron deficiency is shared by several groups. Resonance stabilization and neighboring group stabilization are two of the possible mechanisms by which the carbocations may be stabilized. Polarized, unsaturated compounds exemplified by 3,4-dihydropyran, 2-methoxy-3,4-dihydropyran, styrene, α-methylstyrene, vinyl benzyl chloride, indene, 2-vinylpyridine, N-vinylpyrrolidone, vinyl acetate, octadecyl vinyl ether, cyclohexyl divinyl ether, ethyleneglycol monovinyl ether, allyl phenyl ether, trans-cinnamaldehyde, N-methyl-N-vinylacetamide, N-vinylcaprolactam, isoeugenol, and 2-propenylphenol are suitable. Also suitable are 3,4-dihydro-2-methoxy-2H-pyran; 3,4-dihydro-2-ethoxy-2H-pyran; 3,4-dihydro-2-phenoxy-2H-pyran; 3,4-dihydro-2-formyl-2H-pyran; and 2,3-dihydrofuran. The 3,4-dihydro-2-formyl-2H-pyran is made by the Diels-Alder dimerization of acrolein at high temperatures and pressures. The 3,4-dihydro-2-alkoxy-2H-pyrans and 3,4-dihydro-2-phenoxy-2H-pyran are made by the reaction of the corresponding vinyl ether with acrolein in the presence of a catalytic amount of a zinc salt, e.g., zinc chloride. A variety of 3,4-dihydro-2H-pyrans having a substituent in the 2-position can be made by similar reactions. The products formed by the reaction of 1 and 2 moles of acrolein with the divinyl ether of an alkylene- or polyalkylene glycol are blocking agents, also. The latent mercaptans made from the di-(3,4-dihydropyranyl) ethers also have the potential of being chelating agents in the polymer compositions of this invention. In the case of the reaction of one mole of acrolein per mole of a divinyl ether, the vinyl ether group of the resulting monomer permits the product to be incorporated into a vinyl chloride copolymer followed by the addition of a mercaptan across the double bond of the pyran ring to yield a latent mercaptan that is an integral stabilizer for the polymer. The reaction of one mole of acrolein with one mole of the divinyl ether also allows for the formation of a monomeric latent mercaptan of the mercaptan/tetrahydropyran adduct type in which the vinyl ether group of the resulting monomer permits the product to be copolymerized with one or more of a wide variety of ethylenically unsaturated compounds to form polymeric latent mercaptans. The product from the reaction of acrolein with chloroethyl vinyl ether provides a substituted 3,4-dihydropyran that can be further derivatized. The addition of a mercaptan across the double bond of the pyran ring can be done in the presence of one or more of the zinc salts to yield a stabilizer composition of this invention. Compounds having labile halogen atoms which split off as hydrogen chloride in a condensation reaction with the mercaptan, as exemplified by triphenylmethyl chloride, benzyl chloride, and bis(chloromethyl)benzene, are also suitable. The mercaptan may also be blocked by condensation with an aldehyde such as butyraldehyde or with a benzyl alcohol such as benzene dimethanol. The preferred blocking agents include the 3,4-dihydropyran (DHP) and 2-hydroxybenzyl alcohol, a well known intermediate in the perfume, agricultural, and plastics industries.

In general, the procedure for making latent mercaptans that are useful in this invention comprises adding the mercapto group of the free mercaptan across the double bonds of polarized, unsaturated compounds is as follows:

To a stirred mixture, under nitrogen atmosphere, of the mercaptan, acid catalyst, and optionally, a small percentage of antioxidant to inhibit radical reactions, is added dropwise to the polarized, unsaturated compound, either neat or in solution, while maintaining the temperature between 10-70°C. The mixture or solution is then heated for between 1 and 6 hours at 35-70°C and conversion to product is monitored by gas chromatography and iodine titration for SH. The acid catalyst is removed by an alkaline wash and the resulting product is dried with magnesium sulfate and filtered. The solvent, if required, is removed under reduced pressure at <50°C to yield the latent mercaptan. A solid phase catalyst may be used and then filtered out of the reaction mixture and regenerated for use in a subsequent synthesis, In this way, a wash step is eliminated. This generalized procedure is referred to hereinafter as Procedure A.

In accordance with Procedure A, for example, mercaptoethanol is added across the double bond of N-vinylcaprolactam to yield N-2-hydroxyethylthioethyl-caprolactam. Mercaptoethyldecanoate (mercaptoethylcaproate) reacts with 3,4-dihydropyran in that procedure to give 2-S-(tetrahydropyranyl)thioethyldecanoate. Bis(hydroxyethylthioethyl) cyclohexyl ether is made from the mercaptoethanol and cyclohexyl di-vinyl ether. In like manner, the corresponding caprate, oleate, and tallate esters form the corresponding cyclohexyl ethers. Also, indene is converted by the addition of the mercaptoethanol to 2*H*-dihydroindenylthioethanol. A generalized procedure for the condensation of a free mercaptan with a labile halogen-containing compound is as follows:

To a stirred mixture of the mercaptan and halogen-containing compound under nitrogen atmosphere is added dropwise a solution of sodium methoxide in methanol while maintaining the temperature below 50° C. Optionally, the reaction is allowed to proceed without the addition of a base source and the liberated hydrogen chloride is removed by nitrogen gas sweep and neutralized with the use of an external acid scrubber. The mixture or solution is then heated for between 2 to 24 hours at 50°-70° C and conversion to product is monitored by gas chromatography and iodine titration for %SH. The product is then neutralized, washed with water, dried with magnesium sulfate, and filtered. The solvent, if required, is removed under reduced pressure at <50° C to yield the latent mercaptan. This generalized procedure is referred to hereinafter as Procedure B.

A generalized procedure for the condensation of a free mercaptan with a labile hydroxyl-containing compound is as follows:

To a stirred solution of the mercaptan, acid catalyst, and solvent under nitrogen atmosphere is added the hydroxy-containing compound either neat or in solution while maintaining the temperature <45° C. The solution is then heated to 45°-75° C for between 1 to 10 hours and conversion to product is monitored by gas chromatography and iodine titration for %SH. Optionally, an azeotropic solvent is chosen for removal of reaction water by an appropriate means at reflux temperatures, typically 60°-120° C. Completion of reaction is achieved after the theory amount of water has been collected. The acid catalyst is removed by alkaline wash and the resulting solution is dried with magnesium sulfate and filtered. The solvent is removed under reduced pressure at <55° C to yield the latent mercaptan. This procedure is referred to hereinafter as Procedure C.

For example, 2-hydroxybenzyl alcohol condenses with mercaptoethanol in accordance with Procedure C to form 1-(2-hydroxyphenyl)-1-S-(2-hydroxyethylthio)methane.

A generalized procedure for the reaction of a free mercaptan with a glycidyl ether is as follows:

To a stirred mixture of the mercaptan and acid catalyst under nitrogen atmosphere is added the glycidyl ether, either neat or in solution, while maintaining the temperature between 25°-60° C. The mixture or solution is then heated to between 50°-75° C for a period of 1 to 6 hours and conversion to product is monitored by gas chromatography and iodine titration for %SH. The acid catalyst is removed by alkaline wash, the resulting product is dried with magnesium sulfate, and filtered. The solvent, if required, is removed under reduced pressure at <55° C to yield the latent mercaptan. For example, the reaction between mercaptoethanol and glycidyl neodecanoate gives C₉H₁₉C(=O)OCH₂CH(OH)CH₂SCH₂CH₂OH. This procedure is referred to hereinafter as Procedure D.

A generalized procedure for the condensation of a free mercaptan with an aldehyde is as follows:

To a stirred solution of the mercaptan, acid catalyst, and azeotropic solvent under nitrogen atmosphere is added the aldehyde with heating to reflux, typically between 65°-120° C, for removal of reaction water. Completion of reaction is achieved after the theory amount of water has been collected. Optionally, to a stirred solution of mercaptan, aldehyde, and ether is added BF₃-etherate dropwise under reflux conditions. The solution is refluxed for between 1 to 6 hours and conversion to product is monitored by gas chromatography. The acid catalyst is removed by alkaline wash, the solution is dried with magnesium sulfate and filtered. The solvent is removed under reduced pressure at <65° C to yield the latent mercaptan. This generalized procedure is referred to hereinafter as Procedure E.

Examples of the blocked mercaptans of this invention include compounds having the following formulas, as each relates to FORMULA 1:

### FORMULA

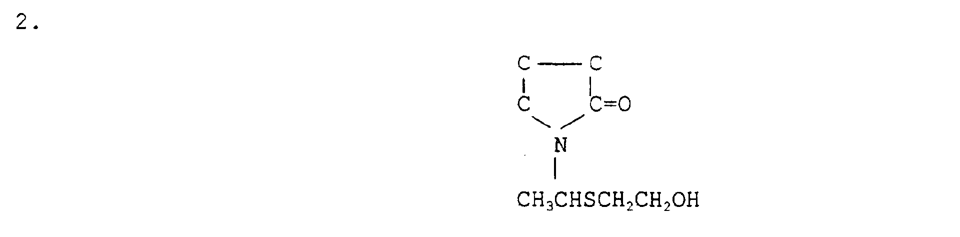

a = 1, m = 1, n = 0; y = 1, z is 1; X is nitrogen, R⁶ and R⁷ are joined to form -CH₂-CH₂-CH₂-C=(O)-; R⁴ is hydrogen; R⁵ is methyl; and R¹ is hydroxyethyl. 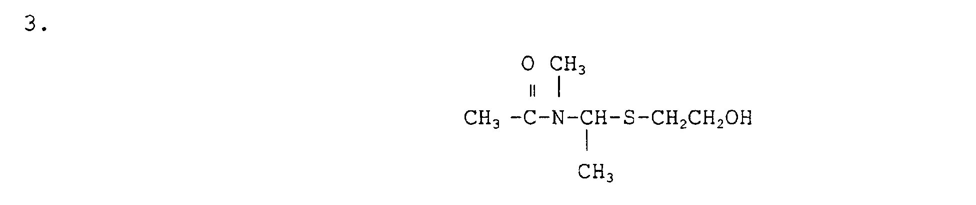 a = 1, m = 1, n = 0; y = 1, z is 1; X is nitrogen, R⁶ is acetyl, R⁷ is methyl, R⁵ is methyl, R⁴ is hydrogen, and R¹ is hydroxyethyl. 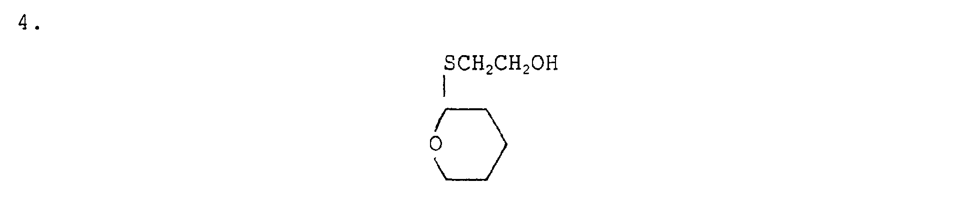 a = 1, m = 0, n = 0; y = 1, z is 1; X is oxygen, R⁵ and R⁷ are joined to form -CH₂-CH₂-CH₂-CH₂-; R⁴ is hydrogen, and R¹ is hydroxyethyl. 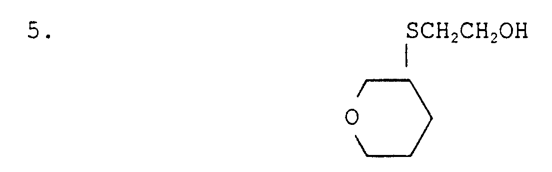 a = 1, m = 0, n = 1, y = 1, z = 1; X is oxygen, R³ and R⁷ join to form -CH₂-CH₂-CH₂-; R², R⁴ and R⁵ are hydrogen, and R¹ is hydroxyethyl. 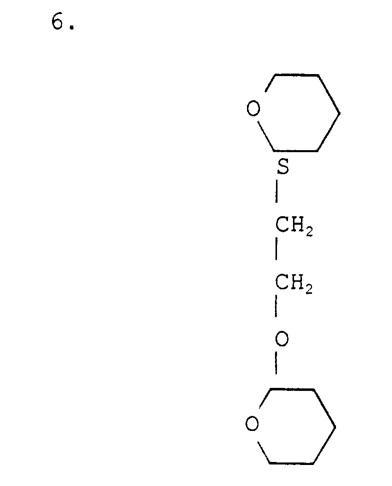 a = 1, m = 0, n = 0, y = 1, z = 1; X is oxygen, R⁵ and R⁷ join to form -CH₂-CH₂-CH₂-CH₂-; R⁴ is hydrogen, and R¹ is 2-ethoxytetrahydropyranyl. 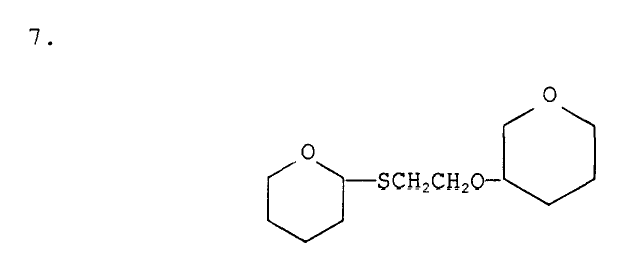 a = 1, m = 0, n = 0, y = 1, z = 1; X is oxygen, R⁵ and R⁷ join to form -CH₂-CH₂-CH₂-CH₂-; R⁴ is hydrogen, and R¹ is 3-ethoxytetrahydropyranyl. 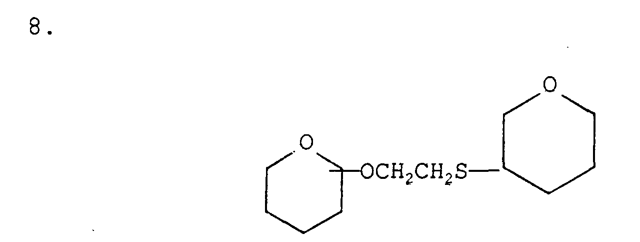 a = 1, m = 0, n = 1, y = 1, z = 1; X is oxygen, R³ and R⁷ join to form -CH₂-CH₂-CH₂-; R², R⁴ and R⁵ are hydrogen, and R¹ is 2-ethoxytetrahydropyranyl. 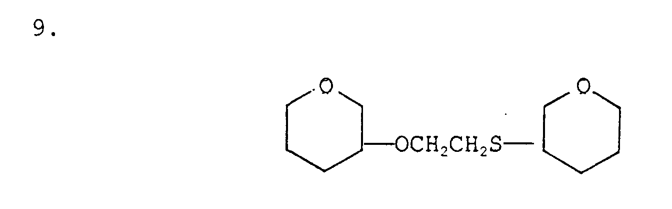 a = 1, m = 0, n = 1, y = 1, z = 1; X is oxygen, R³ and R⁷ join to form -CH₂-CH₂-CH₂-; R², R⁴ and R⁵ are hydrogen, and R¹ is 3-ethoxytetrahydropyranyl. 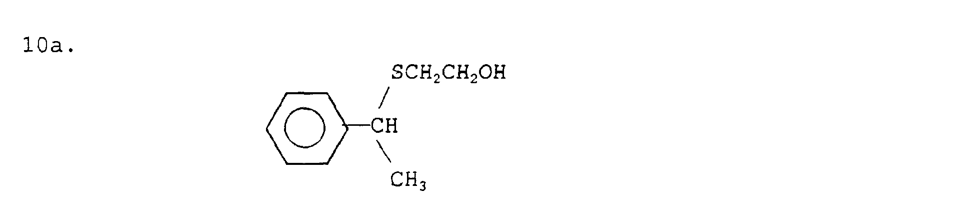 a = 0, m = 0, n = 0, y = 1, z = 1; X is phenyl, R⁴ is methyl, R⁵ is hydrogen, and R¹ is hydroxyethyl. 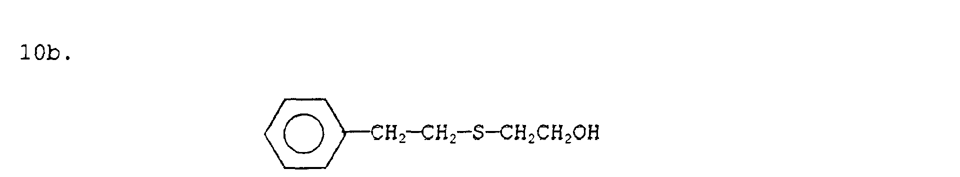 a = 0, m = 0, n = 1, y = 1, z = 1, X is phenyl, R², R³, R⁴, and R⁵ are hydrogen, and R¹ is hydroxyethyl. 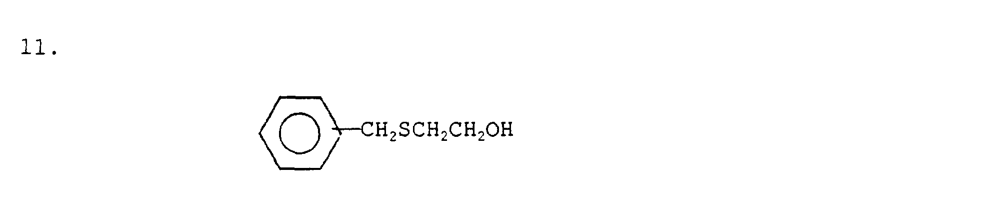 a = 0, m = 0, n = 0, z = 1; y = 1, X is phenyl, R⁴ and R⁵ are hydrogen, and R¹ is hydroxyethyl. 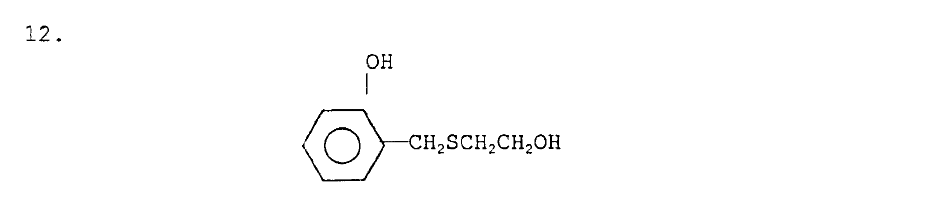 a = 1, m = 0, n = 0, y = 1, z = 1; X is phenyl, R⁴ and R⁵ are hydrogen, R⁷ is o-hydroxy, and R¹ is hydroxyethyl. 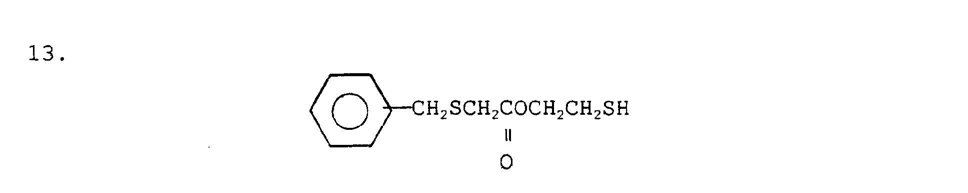 a = 0, m = 0, n = 0, y = 1, z = 1; X is phenyl, R⁴ and R⁵ are hydrogen, and R¹ is mercaptoethoxycarbonylmethyl. 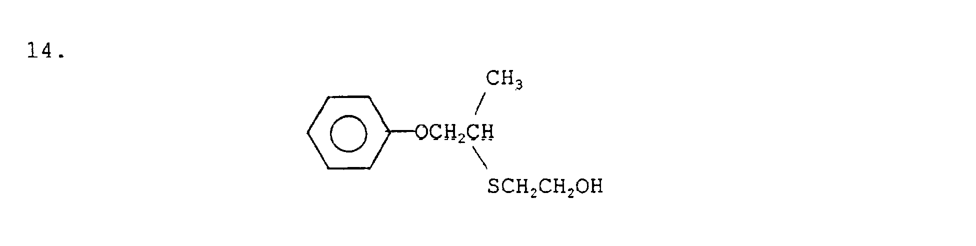 a = 1, m = 0, n = 1, y = 1, z = 1; X is oxygen, R², R⁴ and R⁵ are hydrogen, R³ is methyl, R⁷ is phenyl, and R¹ is hydroxyethyl. 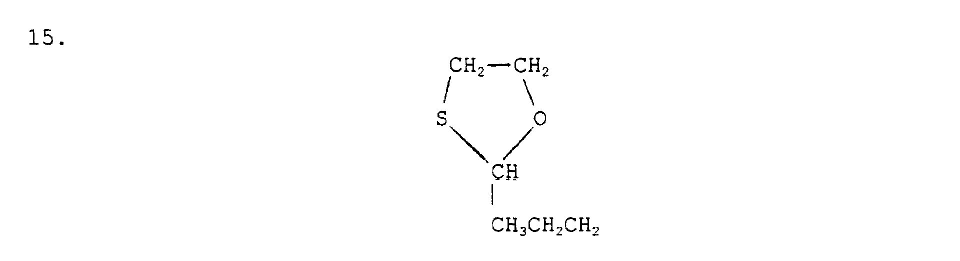 a = 1, m = 0, n = 0, y = 1, z = 1; X is oxygen, R⁷ and R¹ are joined to form an ethylenyl radical, R⁴ is hydrogen, and R⁵ is propyl. 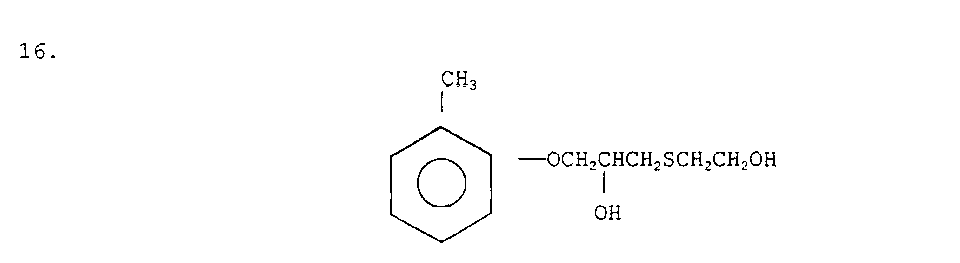 a = 0, m = 1, n = 1, y = 1, z = 1; X is oxygen, R², R³, R⁶ and R⁴ are hydrogen, R⁵ is 2-methyleneoxytolyl, and R¹ is hydroxyethyl, 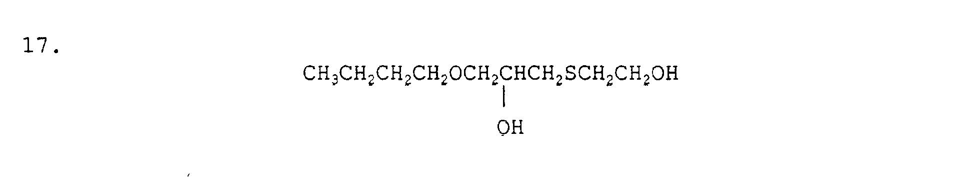 a = 1, m = 0, n = 1, y = 1, z = 1; X is oxygen, R², R³, R⁴ and R⁷ are hydrogen, R⁵ is butoxymethyl, and R¹ is hydroxyethyl. 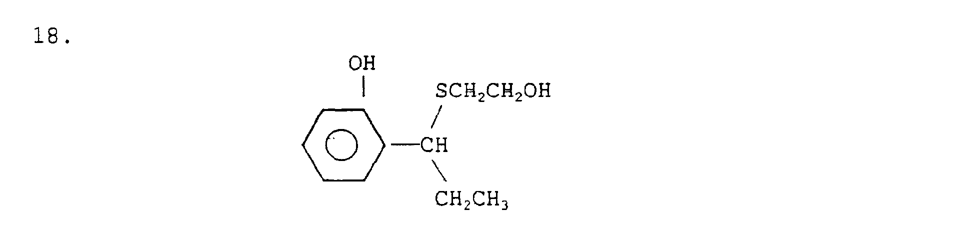 a = 1, m = 0, n = 0, y = 1, z = 1; X is phenyl, R⁴ is hydrogen, R⁵ is ethyl, R⁷ is o-hydroxy, and R¹ is hydroxyethyl. 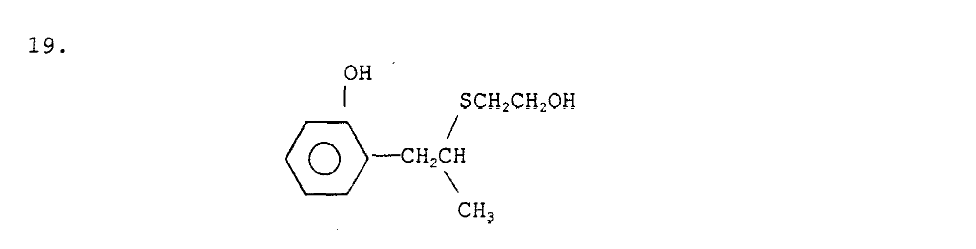 a = 1, m = 0, n = 1, y = 1, z = 1; X is phenyl, R³, R⁴ and R⁵ are hydrogen, R² is methyl, R⁷ is *o*-hydroxy, and R¹ is hydroxyethyl. 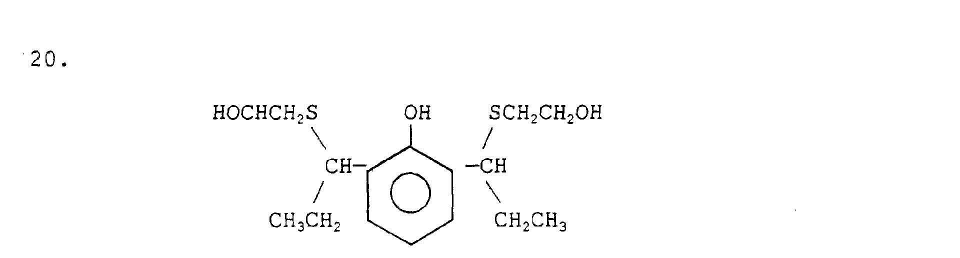 a = 1, m = 0, n = 0, y = 1, z = 2; X is phenyl, R⁴ is hydrogen, R⁵ is ethyl, R⁷ is o-hydroxy, and R¹ is hydroxyethyl. 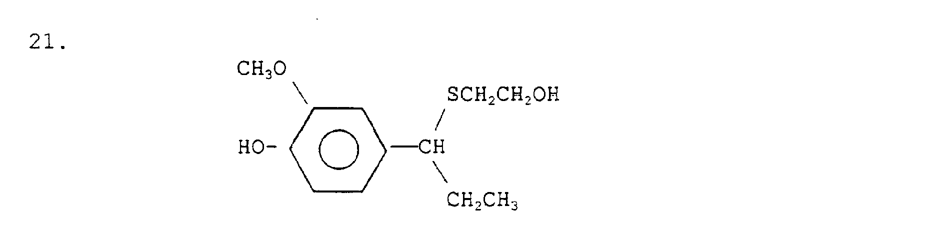 a = 1, m = 0, n = 0, y = 1, z = 1; X is m-methoxyphenyl, R⁴ is hydrogen, R⁵ is ethyl, R⁷ is *p*-hydroxy, and R¹ is hydroxyethyl. 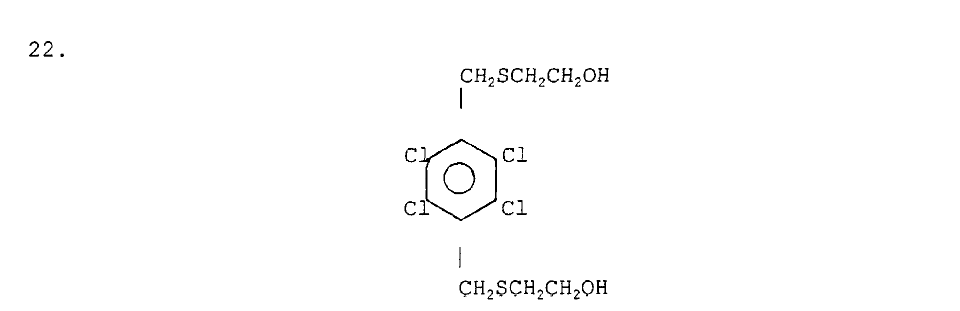 a = 0, m = 0, n = 0, y = 1, z = 2; X is tetrachlorophenyl, R⁴ and R⁵ are hydrogen, and R¹ is hydroxyethyl. 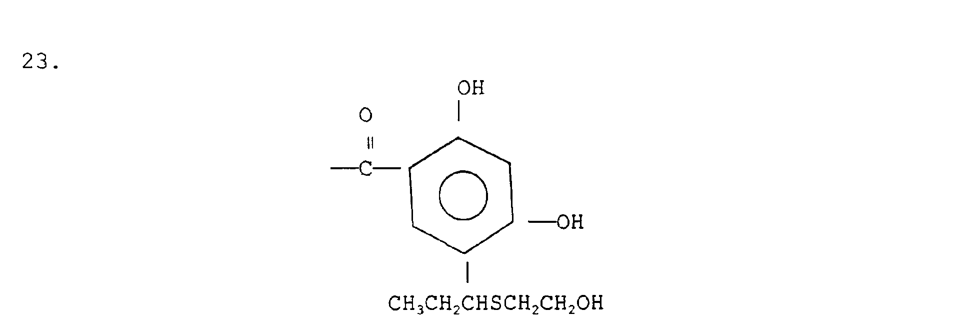 a = 1, m = 0, n = 0, y = 1, z = 1; X is o,p-dihydroxyphenyl, R⁷ is m-phenylcarbonyl, R⁴ is hydrogen, R⁵ is -CH₂CH₃, and R¹ is hydroxyethyl. 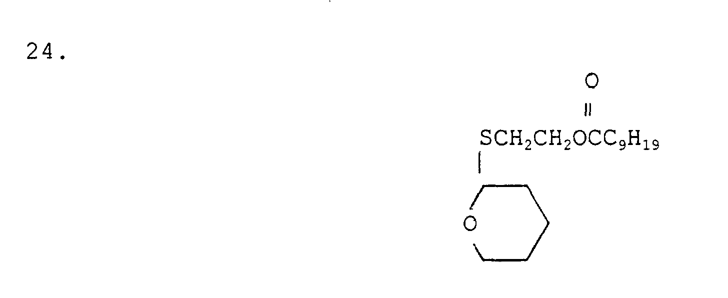 a = 1, m = 0, n = 0; y = 1, z is 1; X is oxygen, R⁵ and R⁷ are joined to form -CH₂-CH₂-CH₂-CH₂-; R⁴ is hydrogen, and R¹ is decanoyloxyethyl. 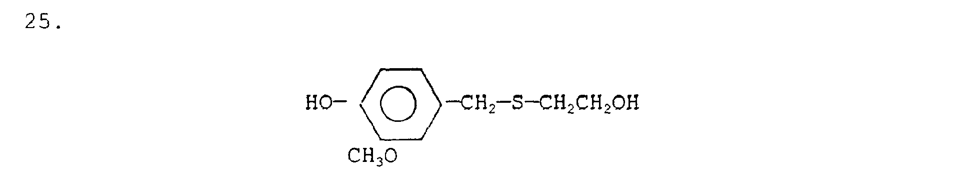 a = 1, m = 0, n = 0; y = 1, z is 1; X is *p*-hydroxyphenyl, R⁴ and R⁵ are hydrogen, R⁷ is m-methoxy, and R¹ is hydroxyethyl.

Homologs of the thus described compounds which are particularly useful in the stabilization of PVC compositions include the 2-S-(tetrahydropyranyl)thioalkyl carboxylates and their furanyl homologs wherein the ethyl moiety is replaced by propyl, butyl, hexyl, and others in the series up to and including dodecyl and the capric acid radical of said compound is replaced by other fatty acid radicals (saturated and unsaturated) or resin acid radicals having up to and including 22 carbon atoms. The acids are exemplified by caproic, caprylic, lauric, myristic, palmitic, stearic, arachidic, behenic, and the oleic and linoleic acids, as such, or as found in tall oil acids along with abietic and pimaric acids. The mercaptoalkyl carboxylate moiety is thus exemplified by mercaptoethyl laurate, mercaptoethyl oleate, mercaptoethyl hexanoate, mercaptoethyl octanoate, mercaptoethyl myristate, mercaptoethyl palmitate, mercaptoethyl stearate, and the mercaptopropyl, mercaptobutyl, and mercaptooctyl homologs of each of the above. The esters are made by the conventional method of reacting the hydroxyl group of a mercaptoalkanol with the desired carboxylic acid in the presence of an acidic catalyst and removing water as it forms. The 2-S-(tetrahydropyranyl)thioalkanols, the carboxylates thereof, and their furanyl homolgs are employed in this invention in an amount sufficient to impart the desired resistance to heat deterioration to halogen-containing organic polymers.

A 2-S-(tetrahydropyranyl)mercaptoalkyl carboxylate is more active as a heat stabilizer in flexible PVC compositions than the tetrahydropyranyl-blocked mercaptans derived from alkylmercaptans such as dodecanethiol when activated according to this invention as manifest in the improved color hold properties and dynamic thermal stability of such stabilized PVC compositions. The higher activity may be the result of the better compatibility of the ester-containing latent mercaptans with a plasticized PVC. The compatibility of the corresponding homologous furan-based latent mercaptans is similar.

It will be readily apparent to one of ordinary skill in the art that the precise amount of stabilizer composition used will depend upon several factors, including, but not limited to, the particular halogen-containing organic polymer employed, the temperature to which the polymer will be subjected, and the possible presence of other stabilizing compounds. In general, the more severe the conditions to which the halogen-containing organic polymer is subjected, and the longer the term required for resisting degradation, the greater will be the amount of stabilizer composition required.

Generally, as little as about 0.05 phr of the latent mercaptan, by weight of the halogen-containing polymer will be effective and, while there is no critical upper limit to the amount of latent mercaptan which can be employed, an amount of about 4 phr or less is preferred. More preferably, the amount of latent mercaptan is from about 0.1 to about 3 phr.

A preferred halogen-containing polymer composition of this invention will contain from about 0.005 to about 1 phr of the synergistic mixture of zinc carboxylate and zinc chloride, by weight of the polymer, and more preferably, from about 0.005 to about 0.5 phr. Still more preferably, the polymer composition of this invention will contain from about 0.08 to about 0.2 phr of said mixture.

The optimal proportions of zinc carboxylate and zinc chloride in the synergistic mixture will, of course, depend upon whether the halogen-containing polymer composition is rigid, semi-rigid, flexible, transparent, or opaque, the number of carbon atoms in the zinc carboxylate, and the amount and nature of co-stabilizers and other additives. The zinc content of zinc stearate, for example, is about 9% while in zinc octanoate it is about 18.5%. Zinc chloride, on the other hand, contains about 48% zinc. Therefore, the amount of the carboxylate and chloride is expressed for the purposes of this invention in terms of the amount of zinc ion contributed by each. The amount of zinc ion contributed by the zinc carboxylate may be from about 15 to about 70% and, likewise, the amount of zinc contributed by the zinc chloride may be from about 30 to about 85% of the total amount of zinc. It is preferred, however, to use combinations of the carboxylate and chloride such that from about 35 to about 60% of the zinc ion is contributed by the carboxylate and from about 40 to about 65% is contributed by the chloride. The beneficial effects of an epoxy or phosphite co-stabilizer are most pronounced when the higher levels of zinc chloride, i.e, contributing between 65 and 85% of the zinc ion, are used.

The number of carbon atoms in said zinc carboxylate is suitably from 2 to 22, preferably from 8 to 18. Examples of the carboxylic acids from which the carboxylates originate include aliphatic and aromatic acids such as acetic, propionic, butyric, n-octanoic, 2-ethylhexanoic, dodecanoic, myristic, oleic, stearic, benzoic, phenylacetic, and other aromatic acids. Zinc octanoate, zinc 2-ethylhexanoate, zinc palmitate, zinc laurate, zinc oleate, and zinc stearate are particular examples of the carboxylates that are useful in the polymer composition of this invention. Mixtures of the carboxylates are useful, also.

From 0-30% of the epoxy compound, based on the weight of the halogen-containing polymer, may be used as co-stabilizers in the compositions of this invention. Examples of the epoxy compounds suitable for the purposes of this invention include epoxidized soya bean oil, epoxidized lard oil, epoxidized olive oil, epoxidized linseed oil, epoxidized castor oil, epoxidized peanut oil, epoxidized corn oil, epoxidized tung oil, epoxidized cottonseed oil, epichlorhydrin/bis-phenol A resins, phenoxy-propylene oxide, butoxypropylene oxide, epoxidized neopentylene oleate, glycidyl epoxystearate, epoxidized olefins, epoxidized glycidyl soyate, dicyclopentadiene dioxide, epoxidized butyl toluate, styrene oxide, dipentene dioxide, glycidol, vinyl cyclo-hexene dioxide, glycidyl ether of resorcinol, glycidol ether of hydroquinone, glycidyl ether of 1,5-dihyroxynaphthalene, epoxidized linseed oil fatty acids, allyl glycidyl ether, butyl glycidyl ether, cyclohexane oxide, 4-(2,3-epoxypropoxy) acetophenone, mesityl oxide epoxide, 2-ethyl-3-propyl glycidamide, glycidyl ethers of glycerine, pentaerythritol and sorbitol, and 3,4-epoxycyclohexane-1,1-dimethanol bis-9,10-epoxystearate.

The organic phosphites that are suitable as co-stabilizers for the purposes of this invention contain one or more, up to a total of three, aryl, alkyl, aralkyl and alkaryl groups, in any combination. The term "trialkylaryl" is inclusive of alkyl, aryl, alkaryl and aralkyl phosphites containing any assortment of alkyl, aryl, alkaryl and aralkyl groups. Triphenyl phosphite, tricresyl phosphite, tri(dimethylphenyl) phosphite, tributyl phosphite, trioctyl phosphite, tridodecyl phosphite, octyl diphenyl phosphite, dioctyl phenyl phosphite, tri(octyl-phenyl) phosphite, tri(nonylphenyl) phosphite, tribenzyl phosphite, butyl dicresyl phosphite, octyl di(octyl-phenyl) phosphite, tri(2-ethyl-hexyl) phosphite, tritolyl phosphite, tri(2-cyclohexylphenyl) phosphite, tri-alpha-naphthyl phosphite, tri(phenylphenyl)phosphite, and tri(2-phenylethyl) phosphite are exemplary. The organic phosphites are used in an amount of from 0 to 10% on a weight basis.

For the purposes of this invention, metallic-based stabilizers are defined as being metal salts and organometallic salts other than zinc salts. For the purposes of this invention, metal salts are defined to include oxides, hydroxides, sulfides, sulfates, chlorides, bromides, fluorides, iodides, phosphates, phenates, perchlorates, carboxylates, and carbonates. The metal salt stabilizers are exemplified by barium, strontium, calcium, tin, magnesium, cobalt, nickel, titanium, antimony, and aluminum salts of hydrochloric acid, sulfuric acid, phenols, aromatic carboxylic acids, fatty acids, epoxidized fatty acids, oxalic acid, acetic acid, and carbonic acid. Calcium stearate, calcium 2-ethylhexanoate, calcium octoate, calcium oleate, calcium ricinoleate, calcium myristate, calcium palmitate, calcium laurate, barium laurate, barium di(nonylphenolate), barium stearate, and magnesium stearate are examples of suitable salts along with tin stearate, aluminum stearate, and hydrotalcite.

The amount of the metallic-based stabilizer is from 0 to about 2%, preferably 0.01-1% by weight of the halogen containing resin.

Conventional organometallic stabilizers include the organotin carboxylates and mercaptides. Such materials include butyltin tris dodecyl mercaptide, dibutyltin dilaurate, dibutyltin didodecyl mercaptide, dianhydride tris dibutylstannane diol, dihydrocarbontin salts of carboxy mercaptals such as those set forth in Hechenbleikner et al.(U.S. Pat. No. 3,078,290). There can be included any of the vinyl chloride resin stabilizers set forth in Salyer (U.S. Pat. No. 2,985,617).

Monosulfides and/or polysulfides of the organotin mercaptides of carboxylates and/or mercaptoalkyl carboxylates and of alkyl thioglycolates are also suitable as metal based stabilizers in the compositions of this invention for improving the resistance of halogen-containing polymers to deterioration when heated to 350° F (177° C) during processing. The sulfides may be made by heating stoichiometric quantities of a mercaptoalkyl ester of a carboxylic acid or an alkyl mercaptocarboxylate and an organotin chloride having the formula:

R'(4-z)SnHalz II

wherein R' is an alkyl group having from 1 to 12 carbon atoms, Hal is a halogen having an atomic weight of from 35 to 127, preferably chlorine, and z is any number from 1 to 3; in water and ammonium hydroxide to about 30°C(86°F), slowly adding an alkali metal mono- or polysulfide, and heating the reaction mixture further to about 45°C before separating the product from said mixture.

Alternatively, the sulfide may be made by mixing a monoalkyl- or dialkyltin sulfide with an organotin mercaptide and by other procedures well known in the stabilizer art.

The sulfides of a mercaptoalkyl ester of a carboxylic acid are characterized by an equilibrium mixture of one or more alkyltin halides of Formula II, one or more mercaptides of Formula III and one or more alkyltin mono- or polysulfides or oligomers thereof, and the alkyltin mono- and polysulfides having the Formula IV.

Formula III reads as follows:

R*(4-n)-Sn- S-Z-[OC(=O)R^{1*}]m n

wherein R* is an alkyl radical having from 1 to 12 carbon atoms; R^{1*} is hydrogen, a hydrocarbyl radical, a hydroxyhydrocarbyl radical, or R^{2*}C(=O)OR^{3*}, wherein R^{2*} is alkylene, hydroxyalkylene, phenylene, or -CH=CH-, and R^{3*} is hydrogen, a hydrocarbyl radical, a hydroxyhydrocarbyl radical, or an alkylcarboxyalkylene radical; Z is an alkylene or hydroxyalkylene radical of at least 2 carbon atoms up to 20 carbon atoms; m is an integer from 1 to 3, n is from 2 to 3, and the valency of Z is m + 1.

Formula IV is representative of linear structures as well as of cyclic trimers and adamantyl rings:

[R^{4*}(4-x)SnS(p/2)]M - [R^{5*} (4-y)SnS(q/2)]N Formula IV

wherein R^{4*} and R^{5*} are independently alkyl radicals having from 1 to 12 carbon atoms and are bonded to Sn; x is 2 or 3; y is 2 or 3; p and q are 2 to 20, preferably 2-4; and M and N are 0-10, preferably 0-4, but M ≠ N = 0; with the proviso that when 4-x)=(4-y), p=q, and when (4-x) ≠ (4-y), p≠ q.

It should be understood that the structures of the sulfides produced by the processes mentioned above are very complex. The reactions are believed to produce an equilibrium mixture composed of several different but related products. As will be appreciated by those of ordinary skill in chemistry, equilibrium mixtures inherently include the starting materials as well as the products of any reaction between them. The chemical and patent literature contain numerous examples demonstrating that members of different classes of organotin compounds may react with one another under certain conditions to yield products containing one or more tin atoms wherein at least a portion of the tin atoms are bonded to different combinations of radicals than they were before being mixed together. Accordingly, the sulfides are believed to include bis[monoorganotin)-bis(thioalkyl-carboxylate)] monosulfides and polysulfides, bis[(diorganotin)-mono(thioalkyl carboxylate)]monosulfides and polysulfides, and products which arise during equilibrium reactions among said mono- and polysulfides, including monoalkyltin tris(thioalkyl carboxylates), dialkyltin bis(thioalkyl carboxylates), mono- and di-organotin mono- and polysulfides, and oligomers thereof, as well as the starting materials themselves. The sulfide of an alkyl ester of a mercaptocarboxylic acid is likewise believed to include bis[monoorganotin)-bis(alkyl mercaptocarboxylate)] monosulfides and polysulfides, bis[(diorganotin)-mono(alkyl mercaptocarboxylate)]monosulfides and polysulfides, and products which arise during equilibrium reactions among said mono- and polysulfides, including monoalkyltin tris(alkyl-mercaptocarboxylates), dialkyltin bis (alkylmercaptocarboxylates), mono- and di-organotin mono- and polysulfides, and oligomers thereof.

The polysulfides include mixtures of compounds having from 2 to 10 sulfur atoms linked together. Mixtures of monosulfides and polysulfides having from 2 to 4 sulfur atoms are preferred.

In addition to the epoxy compounds and organic phosphites mentioned above, other conventional non-metallic stabilizers can also be included in the PVC compositions of the present invention. Thus, there can be included from 0-0.75%, preferably from 0.01-0.75%, based on the weight of the resin, of sulfur containing compounds such as dilaurylthiodipropionate, distearyl 3,3'-thiodipropionate, dicyclohexyl-3,3'-thiodipropionate, dioleyl-3,3'-thiodipropionate, dibenzyl-3,3'-thiodipropionate, didecyl-3,3'-thiodipropionate, dibenzyl-3,3'-thiodipropionate, diethyl-3,3'-thiodipropionate, lauryl ester of 3-methylmercapto-propionic acid, lauryl ester of 3-butylmercaptopropionic acid, lauryl ester of 3-lauryl mercaptopropionic acid, and phenyl ester of 3-octyl mercaptopropionic acid.

From 0 to about 10% by weight of a nitrogen containing stabilizer such as dicyandiamide, melamine, urea, formoguanamine, dimethyl hydantoin, 2-phenylindoles, thiourea, guanidine, aminocrotonates, N-substituted maleimides, uracil, the 1,3-dialkyl-6-amino-uracil derivatives described in German Offenlegungsschrift 19,741,778 by Ciba Specialty Chemicals Holding Inc., and the pyrrolodiazine diones described in published Australian Patent Application No. AU-A-48232/96 by Ciba-Geigy, and the like may also be used in this invention as a co-stabilizer. Of particular interest are the pyrrolodiazine diones described by the formula: 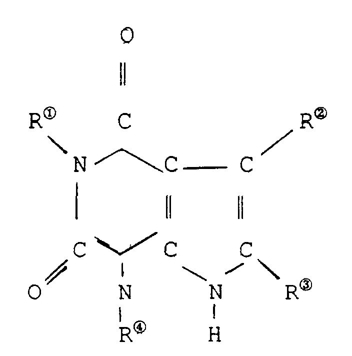 wherein R①, R②, R③, and R④ are independently hydrogen or C¹-C⁴ alkyl. Examples of compounds contemplated for use in this invention include the 1H-pyrrolo[2,3-d]pyrimidine-2,4(3H,7H)diones exemplified by Compound Nos. 103, 111, 123, 129, and 131 of said Australian Patent Application, which have the following substituents:
- No. 103: 1,3,6-trimethyl;
- No. 111: 1,3,6,7-tetramethyl;
- No. 123: none;
- No. 129: 1,3-diethyl,6-methyl;
- No. 131: 1,3-di-n-butyl,6-methyl;

Said compounds may be prepared by the method described by S. Senda and K. Hirota in Chem. Pharm. Bull., 22(7), 1459-1467(1974) or by the reaction of the corresponding aminouracil with molar excesses of chloroacetaldehyde and ammonium acetate in water at about 65°C until a precipitate forms or with molar excesses of acetoxyacetone and ammonium acetate in water at reflux for 12 hours. German Offenlegungsschrift 19,741,778 and Australian Patent Application No. AU-A-48232/96 are each incorporated herein by reference.

Likewise there can be included from 0-10% by weight of the halogen-containing polymer of a polyol stabilizer for such resins. Thus there can be included glycerol, sorbitol, pentaerythritol, mannitol and polyethers such as diethylene glycol, triethylene glycol, tetraethylene glycol, tripropylene glycol, and the like.

In addition to the stabilizer compositions of this invention, the halogen-containing polymer compositions of this invention may contain plasticizers, as mentioned above in regard to flexible PVC, and conventional additives such as pigments, fillers, blowing agents, dyes, ultraviolet light absorbing agents, antioxidants, densifying agents, biocides, and the like.

An antioxidant may be added in an amount of 0.01-10%, preferably 0.1-5% by weight of the polymer. Phenolic antioxidants are particularly suitable and are exemplified by 2,6-di-t-butyl-p-cresol, butylated hydroxyanisole, propyl gallate, 4,4'-thiobis(6-t-butyl-m-cresol), 4,4'-cyclohexylidene diphenol, 2,5-di-t-amyl hydroquinone, 4,4'-butylidene bis(6-t-butyl-m-cresol), hydroquinone monobenzyl ether, 2,2'-methylene-bis(4-methyl-6-t-butyl phenol), 4,4'-methylene-bis(2,6-di-t-butyl phenol), 2-t-butyl-4-dodecyloxy phenol, 2-t-butyl-4-octadecyloxy phenol, 2,6-butyl-4-decyloxy phenol, p-amino phenol, N-lauryloxy-p-amino phenol, 4,4'-thiobis(3-methyl-6-t-butyl phenol), t-butyl phenol, bis [o-(1,1,3,3-tetramethyl butyl)phenol] sulfide, p-t-butylphenol-formaldehyde A-stage resin, 4-acetyl-β-resorcylic acid,4-dodecyloxy-2-hydroxybenzophenone, the n-dodecyl ester of 3-hydroxy-4-(phenyl carbonyl) phenoxyacetic acid, and 3-hydroxy-4-(phenylcarbonyl)phenyl palmitate.

Conventional lubricants for vinyl chloride resins such as low molecular weight polyethylene, i.e. polyethylene wax, fatty acid amides, e.g., lauramide and stearamide, bis-amides, e.g. decamethylene bis-amide, and fatty acid esters, e.g. butyl stearate, glyceryl stearate, linseed oil, palm oil, decyloleate, corn oil, cottonseed oil, hydrogenated cottonseed oil, stearic acid, calcium stearate, mineral oil, montan wax, oxidized polyethylene and the like can also be included.

The following examples further illustrate the preparation of blocked mercaptans of this invention, the preparation of stabilizer compositions of this invention, and the advantages of said blocked mercaptans and stabilizer compositions.

### The Preparation of Blocked Mercaptans

### REFERENCE EXAMPLE 1

H-NMR spectroscopy was used to determine the molecular structue of 2-S-(decanoyloxyethylthio)tetrahydropyran or 2-S-tetrahydropyranyl)thioethylcaprate which was prepared by adding 42.0 grams (0.50 mole) of 3,4-dihydropyran to 112.2 grams (0.50 equivalent) of mercaptoethylcaprate (14.7 % SH) in the presence of an acid catalyst over a period of 45 minutes while maintaining a nitrogen atmosphere and a temperature below 35°C and then heating it to 50°C and holding that temperature for 1.5 hours. After cooling the solution, it was washed with two 200 ml portions of a 10 % sodium bicarbonate solution in water, followed by a 200 ml wash with water. The organic layer was dried with MgSO4 to yield a light yellow liquid having an SH content of less than 0.5% as determined by titration with a 0.100 N iodine solution in isopropanol. The ¹H-NMR (CDCl₃, δ) spectrum was: 2.3 (2H, t, -C(=O)-CH₂-CH₂), 2.8 (2H, m, -S-CH₂-CH₂-), 4.2 (2H, m, -S-CH₂CH₂-O-), 4.9 (1H, m, -O-CH(-S-CH₂-)-CH₂-CH₂-). The total color change (dE) of a PVC composition containing 0.13 phr of the latent mercaptan of this example was measured versus a white tile standard using a Hunter colorimeter at one minute intervals. At one minute, it was 4.2; at five minutes, it was 8.4.

### REFERENCE EXAMPLE 2

2-S-(tetrahydropyranyl)-(2-ethylhexyl)thioglycolate is prepared by adding 172.45 grams (2.05 equiv.) of 3,4-dihydro(2H)pyran dropwise to 472 grams (2.00 equiv.) of 2-ethylhexyl thioglycolate containing 0.9 gram of methanesulfonic acid (70% active) over a period of 45 minutes under a nitrogen blanket and a temperature between 25-35 C and heating to 35-40 C for 2 hours. The reaction mixture is cooled before being vacuum filtered through carbon black to yield the desired product.

### The Preparation of Stabilizer Compositions of this Invention

### EXAMPLES 1-4 and CONTROLS

Rigid PVC compositions containing:

| INGREDIENT | AMOUNT |
|---|---|
| PVC resin GEON 103-EP | 100.0 |
| Calcium carbonate | 5.0 |
| XL-165 | 1.1 |
| Calcium stearate | 0.4 |
| Oxidized polyethylene | 0.15 |
| 2-S-(tetrahydropyranyl)-(2-ethylhexyl)thioglycolate | 0.5 |

and the amounts of zinc chloride (as a 50% solution in water) and zinc stearate indicated in Table 1 to give a constant level of zinc ion (about 0.02 phr) were processed on a standard horizontal two-roll mill (roll speeds 30F/40R) at 380°F with chips taken at one minute intervals to a maximum of 12 minutes. The amount of zinc ion contributed by each of the zinc salts is also shown in Table I. The color properties of the chips were measured using a Hunter Labs Colorimeter (L, a, b) and the yellowness index was selected as the measurement for comparison in Table II.

**TABLE I**

| Example | Zinc salt | Amount (phr) | % Zn Cntrbn |
|---|---|---|---|
| Control A | Zinc stearate | 0.230 | 100 |
| | | | |
| 1. | Zinc stearate | 0.184 | 70 |
| | Zinc chloride | 0.020 | 30 |
| | | | |
| 2. | Zinc stearate | 0.138 | 55 |
| | Zinc chloride | 0.040 | 45 |
| | | | |
| 3. | Zinc stearate | 0.092 | 35 |
| | Zinc chloride | 0.060 | 65 |
| | | | |
| 4. | Zinc stearate | 0.046 | 17 |
| | Zinc chloride | 0.080 | 83 |
| | | | |
| Control B | Zinc chloride | 0.100 | 100 |

**TABLE II**

| PVC Color Hold (Yellowness Index) | | | | | | | | | | | | |
|---|---|---|---|---|---|---|---|---|---|---|---|---|
| Ex. | Time/Minutes | | | | | | | | | | | |
| Control A | 1 | 2 | 3 | 4 | 5 | 6 | 7 | 8 | 9 | 10 | 11 | 12 |
| 1 | 26.1 | 62.4 | 74.7 | 81.5 | 76.9 | 70.5 | 62.8 | 50.9 | 46.4 | 50.3 | 62.4 | 76.8 |
| 2 | 16.2 | 28.0 | 40.4 | 46.4 | 47.3 | 43.8 | 40.0 | 37.2 | 40.1 | 51.4 | 67.1 | 83.1 |
| 3 | 14.9 | 17.2 | 21.4 | 24.3 | 26.7 | 26.6 | 30.2 | 35.8 | 48.3 | 61.8 | 83.6 | 96.1 |
| 4 | 13.0 | 14.3 | 15.4 | 17.2 | 19.3 | 23.9 | 32.0 | 44.5 | 64.4 | 86.6 | 96.3 | 91.7 |
| 5 | 13.0 | 14.4 | 15.4 | 18.0 | 23.7 | 33.5 | 49.6 | 71.3 | 90.9 | 98.3 | 98.1 | --- |
| Control B | 13.3 | 13.9 | 15.0 | 18.1 | 25.2 | 38.9 | 55.9 | 77.5 | 93.5 | 96.3 | 98.5 | --- |

Articles of manufacture contemplated by this invention, e.g. packaging film, tubing, rigid pipe, and window profile, are formed from the stabilized compositions of this invention by any of the well-known conventional techniques for forming polymers into shaped articles.

While a few specific embodiments of this invention have been disclosed in considerable detail, variations and modifications of these embodiments can be effected without departing from the spirit and scope of the invention as disclosed and claimed herein.

## Claims

1. A polymer composition comprising a halogen-containing polymer, the degradation products of a blocked mercaptan present during processing of the composition at an elevated temperature, said products including a free mercaptan; said blocked mercaptan having the structure: 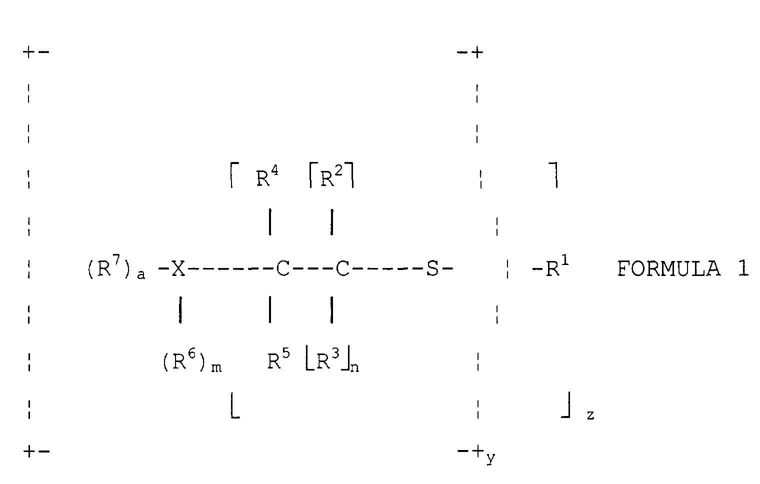 wherein a is 0 or 1, m and n are 0 or 1; y = 1 to 4; when y = 1, z is 1 to 4; and when y is more than 1, z is 1; R¹ is an alkyl, alkylenyl, cycloalkyl, cycloalkylenyl, aryl, alkaryl, aralkyl, aralkylenyl, hydroxyalkyl, dihydroxyalkyl, hydroxy(polyalkoxy)alkyl, alkoxyalkyl, hydroxyalkoxyalkyl, alkoxy(hydroxyalkyl), alkoxy(acyloxyalkyl), alkoxy(polyalkoxy)alkyl, alkoxy(polyalkoxy)carbonylalkyl, carboxyalkyl, acyloxyalkyl, acyloxy(hydroxyalkyl), acyloxyalkoxyalkyl, acyloxy(polyalkoxy)alkyl, benzoyloxy(polyalkoxy)alkyl, alkylenebis-(acyloxyalkyl), alkoxycarbonylalkyl, alkoxycarbonylalkylenyl, hydroxyalkoxycarbonylalkyl, hydroxy(polyalkoxy)carbonylalkyl, mercaptoalkyl, mercaptoalkylenyl, mercaptoalkoxycarbonylalkyl, mercaptoalkoxycarbonylalkylenyl, alkoxycarbonyl (amido)alkyl, alkylcarbonyloxy(polyalkoxy)carbonylalkyl, tetrahydopyranyloxy(polyalkoxy)carbonylalkyl, tetrahydropyranyloxyalkyl, hydroxyaryl, mercaptoaryl or carboxyaryl radical having from 1 to 22 carbon atoms; R², R³, R⁴, R⁵, R⁶, and R⁷ are independently hydrogen, a hydroxyl, mercapto, acyl, alkyl, alkylenyl, aryl, haloaryl, alkaryl, aralkyl, hydroxyalkyl, mercaptoalkyl, hydroxyaryl, alkoxyaryl, alkoxyhydroxyaryl, mercaptoaryl groups having from 1 to 22 carbon atoms; X is aryl, haloaryl, alkaryl, hydroxyaryl, dihydroxyaryl, alkoxyaryl, arylcycloalkyl, or a heteroatom, with the option that when a is 1 and m is 1, R⁶ and R⁷ form a heterocyclic moiety in conjunction with X as nitrogen, and with the further option that when a = 1 and m = 0, one of R¹, R³, and R⁵ joins with R⁷ and X to form a heterocyclic moiety with X as a heteroatom selected from the group consisting of oxygen and sulfur; with the proviso that z is 1 or 2 when X is aralkaryl, R⁶ and R⁷ are hydroxyl, a is 1 and m is 1, and with the further proviso that when R⁶ ≠ hydroxyl or mercapto, z is 1;
from about 0.005 to about 2 phr of a mixture of zinc chloride and a zinc carboxylate; and
from 0 to about 10 phr of at least one co-stabilizer selected from the group consisting of an epoxy compound and an organic phosphite; all based on the weight of the polymer.

2. The composition of claim 1 wherein the amount of the blocked mercaptan is from about 0.05 to about 4 phr, by weight, of the polymer.

3. The composition of claims 1 or 2, wherein the amounts of zinc carboxylate and zinc chloride in the mixture, expressed as zinc ion, are from about 15 to about 70% and from about 30 to about 85%, respectively, of the total amount of zinc.

4. The composition of claims 1, 2 or 3, wherein the amount of said co-stabilizer is 0.

5. The composition of claims 1, 2, 3 or 4, wherein R¹ is selected from the group consisting of: an acyloxyalkyl group, a hydroxyalkyl group, and an alkoxycarbonyl-alkyl group.

6. A stabilizer composition comprising a latent mercaptan having the structure: 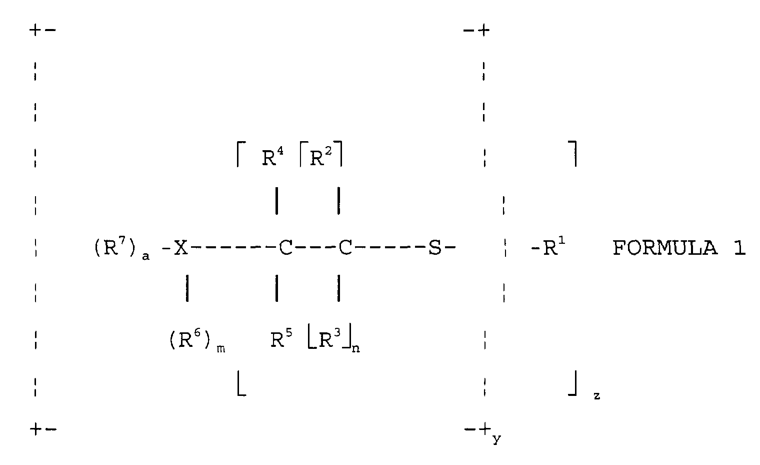 wherein a is 0 or 1, m and n are 0 or 1; y = 1 to 4; when y = 1, z is 1 to 4; and when y is more than 1, z is 1; R¹ is an alkyl, alkylenyl, cycloalkyl, cycloalkylenyl, aryl, alkaryl, aralkyl, aralkylenyl, hydroxyalkyl, dihydroxyalkyl, hydroxy(polyalkoxy)alkyl, alkoxyalkyl, hydroxyalkoxyalkyl, alkoxy(hydroxyalkyl), alkoxy(acyloxyalkyl), alkoxy(polyalkoxy)alkyl, alkoxy(polyalkoxy)carbonylalkyl, carboxyalkyl, acyloxyalkyl, acyloxy(hydroxyalkyl), acyloxyalkoxyalkyl, acyloxy(polyalkoxy)alkyl, benzoyloxy(polyalkoxy)alkyl, alkylenebis-(acyloxyalkyl), alkoxycarbonylalkyl, alkoxycarbonylalkylenyl, hydroxyalkoxycarbonylalkyl, hydroxy(polyalkoxy)carbonylalkyl, mercaptoalkyl, mercaptoalkylenyl, mercaptoalkoxycarbonylalkyl, mercaptoalkoxycarbonylalkylenyl, alkoxycarbonyl(amido)alkyl, alkylcarbonyloxy(polyalkoxy)carbonylalkyl, tetrahydopyranyloxy(polyalkoxy)carbonylalkyl, tetrahydropyranyloxyalkyl, hydroxyaryl, mercaptoaryl or carboxyaryl radical having from 1 to 22 carbon atoms; R², R³, R⁴, R⁵, R⁶, and R⁷ are independently hydrogen, a hydroxyl, mercapto, acyl, alkyl, alkylenyl, aryl, haloaryl, alkaryl, aralkyl, hydroxyalkyl, mercaptoalkyl, hydroxyaryl, alkoxyaryl, alkoxyhydroxyaryl, mercaptoaryl groups having from 1 to 22 carbon atoms; X is aryl, haloaryl, alkaryl, hydroxyaryl, dihydroxyaryl, alkoxyaryl, arylcycloalkyl, or a heteroatom, with the option that when a is 1 and m is 1, R⁶ and R⁷ form a heterocyclic moiety in conjunction with X as nitrogen, and with the further option that when a = 1 and m = 0, one of R¹, R³, and R⁵ joins with R⁷ and X to form a heterocyclic moiety with X as a heteroatom selected from the group consisting of oxygen and sulfur; with the proviso that z is 1 or 2 when X is aralkaryl, R⁶ and R⁷ are hydroxyl, a is 1 and m is 1, and with the further proviso that when R⁶ ≠ hydroxyl or mercapto, z is 1; and a mixture of zinc chloride and a zinc carboxylate, with or without a co-stabilizer selected from the group consisting of an epoxy compound and an organic phosphite.

7. The stabilizer composition of claim 6 wherein the latent mercaptan constitutes from about 25 % to about 99.5 % of the total weight.

8. The stabilizer composition of claims 6 or 7, comprising from about 0.5 to about 75% of the mixture of zinc carboxylate and zinc chloride by weight.

9. The stabilizer composition of claims 6, 7 or 8, wherein the zinc carboxylate and zinc chloride mixture contains from about 15 to about 70% of carboxylate and from about 30 to about 85% of the chloride, expressed as zinc ion.

10. The stabilizer composition of claims 6, 7, 8 or 9, without said co-stabilizer.
